# EUROPÄISCHE PATENTSCHRIFT

(11) **EP 3 214 285 B1**
(45) Veröffentlichungstag und Bekanntmachung des Hinweises auf die Patenterteilung: **07.04.2021**
(21) Anmeldenummer: 17157033.6
(22) Anmeldetag: 21.02.2017
(51) Int. Cl.: F01P 3/20

(54) **VERFAHREN ZUM BETREIBEN EINES KRAFTFAHRZEUGS**
METHOD FOR OPERATING A MOTOR VEHICLE
PROCÉDÉ DE FONCTIONNEMENT D'UN VÉHICULE AUTOMOBILE

(30) Priorität: 02.03.2016 DE 102016002518
(43) Veröffentlichungstag der Anmeldung: 06.09.2017
(73) Patentinhaber: Audi AG, 85045 Ingolstadt (DE)
(72) Erfinder: Apelsmeier, Andreas, 85131 Pollenfeld (DE); Vetter, Günter, 72393 Burladingen (DE)

(56) Entgegenhaltungen:
- EP-A1- 1 197 644
- DE-T5-112011 104 043
- US-A1- 2004 163 861

## Beschreibung

Die Erfindung betrifft ein Verfahren zum Betreiben eines Kraftfahrzeugs und ein System zum Betreiben eines Kraftfahrzeugs.

Ein Kraftfahrzeug kann einen Elektromotor und einen Verbrennungsmotor aufweisen, mit denen das Kraftfahrzeug angetrieben werden kann. Dabei wird der Verbrennungsmotor einerseits mit einer ersten Kühlanlage auf eine erste Temperatur gekühlt. Andererseits wird der Elektromotor mit einer zweiten Kühlanlage auf eine zweite Temperatur gekühlt.

Aus der Druckschrift GB 2 500 205 A ist ein integraler Kühlkreislauf für einen Hybridantriebsstrang eines Kraftfahrzeugs bekannt, das einen Elektromotor und einen Verbrennungsmotor aufweist. Beide Motoren weisen hier einen gemeinsamen Kühlkreislauf auf. Dabei wird Kühlwasser für den Elektromotor stärker als für den Verbrennungsmotor gekühlt Ein ähnlicher Kühlkreislauf wird in der Druckschrift US2004/163861 A1 gezeigt.

Ein verzweigtes Kühlsystem ist in der Druckschrift EP 2 450 217 A2 beschrieben. Dieses Kühlsystem ist für ein Hybridfahrzeug mit einem Verbrennungsmotor und einem Elektromotor vorgesehen und umfasst für beide Motoren einen verzweigten Einzelkühlkreislauf, in dem die Motoren zueinander parallel geschaltet sind. Dabei wird der Elektromotor mit einem kälteren Kühlmedium als der Verbrennungsmotor gekühlt.

Ein weiterer Kühlkreislauf für ein Hybridfahrzeug mit einem Elektromotor und einem Verbrennungsmotor ist aus der Druckschrift FR 2 991 924 A1 bekannt. Dabei ist der Kühlkreislauf für beide Motoren vorgesehen. Außerdem umfasst der Kühlkreislauf einen Luftwärmetauscher mit zwei Durchflussrichtungen. Eine Temperatur eines Kühlmittels für beide Motoren wird variabel eingestellt.

Die Druckschrift DE 10 2012 217 101 A1 zeigt einen integrierten Kühlmittelkreislauf für ein Fahrzeug, der als erste Komponente eine elektrische Maschine und als zweite Komponente einen Verbrennungsmotor aufweist, wobei die erste Komponente in einem niedrigen Temperaturbereich Wärme abgibt, wohingegen die zweite Komponente in einem höheren Temperaturbereich Wärme abgibt. Hierbei wird zwischen einem Hochtemperaturkreislauf für Temperaturen zwischen ca. 90° und 125°C sowie einem Niedertemperaturkreislauf mit einem Temperaturbereich von bspw. 55° bis 85°C unterschieden.

In der Druckschrift DE 11 2014 003 408 T5 ist ein Wärmemanagement-Ventilmodul beschrieben, mit dem es möglich ist, Ströme für ein Kühlmittel zu steuern.

Das erfindungsgemäße Verfahren ist zum Betreiben eines Kraftfahrzeugs vorgesehen, das eine als Verbrennungskraftmaschine ausgebildete Maschine und eine als Elektromaschine ausgebildete Maschine aufweist, wobei das Kraftfahrzeug mit mindestens einer dieser beiden Maschinen angetrieben wird. Beide Maschinen werden über einen gemeinsamen Kühlmittelkreislauf mit einem Kühlmittel gekühlt. Dabei ist die Verbrennungskraftmaschine der Elektromaschine nachgeschaltet, wobei Kühlmittel zunächst zu der Elektromaschine und von der Elektromaschine zu der Verbrennungskraftmaschine gefördert wird. Dabei wird für das Kühlmittel eine erste Temperatur eingestellt, wenn das Kraftfahrzeug lediglich durch die Verbrennungskraftmaschine angetrieben wird. Für das Kühlmittel wird eine zweite Temperatur eingestellt, wenn das Kraftfahrzeug in einem Hybridmodus durch die Elektromaschine und die Verbrennungskraftmaschine angetrieben wird. Hierbei wird die zweite Temperatur geringer als die erste Temperatur eingestellt.

Außerdem ist vorgesehen, dass der Elektromaschine eine Leistungselektronik zugeordnet ist, die gemeinsam mit der Elektromaschine betrieben wird, wobei das Kühlmittel zum Kühlen der Leistungselektronik auf dieselbe Temperatur eingestellt wird, wie dies auch zum Kühlen der Elektromaschine vorgesehen wird. Üblicherweise wird die Elektromaschine der Leistungselektronik nachgeschaltet, wobei Kühlmittel zunächst zu der Leistungselektronik und von der Leistungselektronik zu der Elektromaschine gefördert wird.

Das erfindungsgemäße System ist zum Betreiben eines Kraftfahrzeugs ausgebildet, das eine als Verbrennungskraftmaschine ausgebildete Maschine und eine als Elektromaschine ausgebildete Maschine aufweist und mit mindestens einer dieser beiden Maschinen anzutreiben ist. Das System umfasst einen für beide Maschinen gemeinsamen Kühlmittelkreislauf mit einem Kühlmittel zum Kühlen beider Maschinen. In dem Kühlmittelkreislauf ist die Verbrennungskraftmaschine der Elektromaschine nachgeschaltet, wobei Kühlmittel zunächst zu der Elektromaschine und von der Elektromaschine zu der Verbrennungskraftmaschine zu fördern ist. Für das Kühlmittel ist eine erste Temperatur einzustellen, wenn das Kraftfahrzeug lediglich durch die Verbrennungskraftmaschine anzutreiben ist. Für das Kühlmittel ist dagegen eine zweite Temperatur einzustellen, wenn das Kraftfahrzeug durch die Verbrennungskraftmaschine und die Elektromaschine anzutreiben ist. Dabei ist die zweite Temperatur geringer als die erste Temperatur.

In Ausgestaltung umfasst das System die beiden Maschinen, die über den Kühlmittelkreislauf miteinander verbunden und somit innerhalb des Kühlmittelkreislaufs in Reihe geschaltet sind.

Das System weist weiterhin eine Leistungselektronik auf, die der Elektromaschine zugeordnet ist. Dabei ist die Elektromaschine innerhalb des Kühlmittelkreislaufs zwischen der Leistungselektronik und der Verbrennungskraftmaschine geschaltet.

Der Kühlmittelkreislauf weist einen Kühler auf, der dazu ausgebildet ist, die Temperatur des Kühlmittels einzustellen, wobei das Kühlmittel ausgehend von dem Kühler zunächst zu der Elektromaschine und danach zu der Verbrennungskraftmaschine zu fördern ist. Das von einer Pumpe des Kühlmittelkreislaufs zu fördernde Kühlmittel wird ausgehend von dem Kühler zunächst zu der Leistungselektronik, danach zu der Elektromaschine und danach zu der Verbrennungskraftmaschine gefördert.

Somit ist vorgesehen, für die Verbrennungskraftmaschine und Hochspannungskomponenten des Kraftfahrzeugs, d. h. die Elektromaschine und die Leistungselektronik, einen gemeinsamen Kühlmittelkreislauf zu verwenden und hierbei die Temperatur des Kühlmittels zum Kühlen der Verbrennungskraftmaschine abzusenken. Falls das üblicherweise als Hybridfahrzeug ausgebildete Kraftfahrzeug rein elektrisch gefahren und somit angetrieben wird, wird die Temperatur des Kühlmittels in dem gemeinsamen Kühlmittelkreislauf im Vergleich zu einem Hybridmodus reduziert, da hierbei lediglich die Elektromaschine und die Leistungselektronik zu kühlen sind, wobei bei den genannten elektronischen Antriebskomponenten dennoch eine geforderte Leistungsdichte zu erreichen ist.

Falls das Kraftfahrzeug lediglich durch den Verbrennungsmotor angetrieben wird, wird die Temperatur des Kühlmittels im Vergleich zum Hybridmodus erhöht.

Falls das Kraftfahrzeug in dem Hybridmodus zu betreiben ist, wobei sowohl die Verbrennungskraftmaschine als auch die Elektromaschine und deren Leistungselektronik aktiv sind, wird für das Kühlmittel die zweite Temperatur eingestellt, die geringer als die erste Temperatur ist, wenn das Kraftfahrzeug lediglich durch die Verbrennungskraftmaschine angetrieben wird. Die zweite Temperatur ist jedoch höher als eine dritte Temperatur, die eingestellt wird, wenn das Kraftfahrzeug lediglich durch die Elektromaschine rein elektrisch angetrieben wird.

Im Hybridmodus ergibt sich ein Drehmoment bzw. eine Leistung sämtlicher Maschinen zum Antreiben des Kraftfahrzeugs aus Drehmomenten bzw. Leistungen der Verbrennungskraftmaschine, der Elektromaschine sowie der Leistungselektronik, wobei die Elektromaschine mit der Leistungselektronik nicht eine volle Leistung abgeben muss und auch bei einer höheren Temperatur betrieben werden kann.

Im Rahmen des Verfahrens ist vorgesehen, für beide zum Antreiben des Kraftfahrzeugs vorgesehenen Maschinen den gemeinsamen Kühlmittelkreislauf zu verwenden. Außerdem wird eine Temperatur des Kühlmittels für die Verbrennungskraftmaschine abgesenkt. Eine etwaige Verschlechterung von CO₂-Emissionen der Verbrennungskraftmaschine wird hierbei durch den Hybridantrieb, der beide Maschinen umfasst, kompensiert. Durch Kühlen der Elektromaschine bzw. elektrischen Maschine können deren Kapazität einer Batterie sowie deren elektrische Reichweite vergrößert werden. Bei rein elektrischem Betrieb des Kraftfahrzeugs wird für das Kühlmittel die dritte Temperatur eingestellt, die geringer als die zweite Temperatur und somit auch die erste Temperatur ist. Dabei ist möglich, dass für die Elektromaschine sowie die zugeordnete Leistungselektronik als elektrische Komponenten zum Antreiben des Kraftfahrzeugs eine geforderte Leistungsdichte erreicht werden kann. Beim Betrieb im Hybridmodus wird für das Kühlmittel ausgehend von der dritten Temperatur die zweite Temperatur eingestellt und somit angehoben, wobei auch in diesem Fall die Verbrennungskraftmaschine mitgekühlt wird. Ein Drehmoment und/oder eine Leistung des gesamten Antriebs wird in diesem Fall über die Verbrennungskraftmaschine, die Elektromaschine und die zugeordnete Leistungselektronik bereitgestellt, wobei die beiden elektronischen Komponenten auch bei überhöhter Temperatur nicht die volle Leistung abgeben müssen.

Falls beim Betrieb des Kraftfahrzeugs ein kurzzeitiges Boosten und somit eine kurzzeitige Erhöhung der Leistung, bspw. zum Beschleunigen des Kraftfahrzeugs, durchgeführt wird, ist vorgesehen, dass die Elektromaschine kurzzeitig die volle Leistung abgibt. Bei einer Umsetzung des Verfahrens, bei dem die Temperatur des Kühlmittels in dem Kühlmittelkreislauf abhängig davon eingestellt wird, welche mindestens eine Maschine zum Antreiben des Kraftfahrzeugs verwendet wird, wird abgewägt, wie die Temperatur des Kühlmittels hinsichtlich einer CO₂-Bilanz einzustellen ist.

Da das Kraftfahrzeug für seine zwei Maschinen und somit Aggregate zu dessen Antrieb lediglich einen einzigen Kühlmittelkreislauf aufweist, sind Bauraum und Masse einer Einrichtung zum Kühlen dieser beiden Maschinen im Vergleich zu einem Kraftfahrzeug, das aus dem Stand der Technik bekannt ist, zu sparen, da ein derartiges Kraftfahrzeug aus dem Stand der Technik für jede Maschine, d. h. für die Elektromaschine sowie für die Verbrennungskraftmaschine, jeweils einen Kühlmittelkreislauf benötigt.

In Ausgestaltung ist möglich, für das Kühlmittel zum Kühlen der Verbrennungskraftmaschine eine Temperatur von 95° C einzustellen. Weiterhin ist möglich, die Temperatur des Kühlmittels auf eine niedrige Temperatur von ca. 40° C abzusenken. Allerdings beeinflusst die Temperatur des Kühlmittels einen Abgas- und Co₂-Ausstoß der Verbrennungskraftmaschine. Beim Einstellen der Temperatur sind das ganze System und das Kraftfahrzeug zu berücksichtigen. So ist es bspw. möglich, die Temperatur auf ca. 70° C einzustellen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

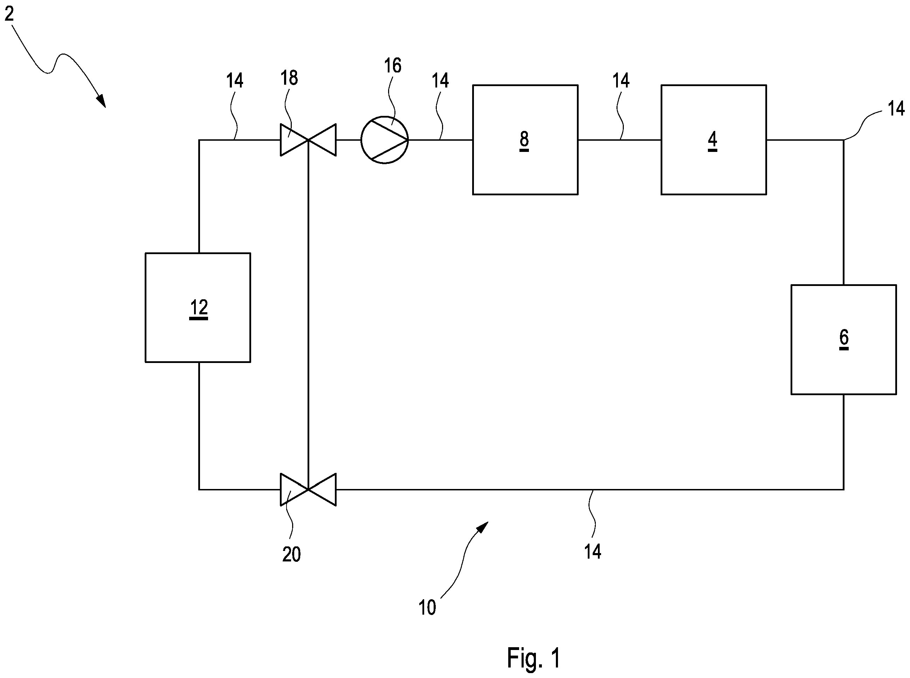

Figur 1 zeigt in schematischer Darstellung eine Ausführungsform des erfindungsgemäßen Systems.

Die in Figur 1 schematisch dargestellte Ausführungsform des erfindungsgemäßen Systems 2 ist zum Antreiben eines Kraftfahrzeugs sowie als Komponente dieses Kraftfahrzeugs ausgebildet. Dabei umfasst das System 2 zum Antreiben des Kraftfahrzeugs eine als Elektromaschine 4 ausgebildete erste Maschine sowie eine als Verbrennungskraftmaschine 6 ausgebildete zweite Maschine. Dabei wird das Kraftfahrzeug mit mindestens einer dieser beiden genannten Maschinen angetrieben.

In einem rein elektrischen Betrieb ist vorgesehen, das Kraftfahrzeug lediglich mit der Elektromaschine 4 anzutreiben, der weiterhin eine Leistungselektronik 8 zugeordnet ist, die immer dann in Betrieb ist, wenn auch die Elektromaschine 4 in Betrieb ist. Alternativ hierzu ist es möglich, das Kraftfahrzeug lediglich durch die Verbrennungskraftmaschine 8 anzutreiben. Weiterhin ist das Kraftfahrzeug auch in einem Hybridmodus zu betreiben, wobei das Kraftfahrzeug gleichzeitig durch die Elektromaschine 4 und die Verbrennungskraftmaschine 6 angetrieben wird.

Zum Kühlen der Elektromaschine 4 mit der zugeordneten Leistungselektronik 8 und der Verbrennungskraftmaschine 6 wird lediglich ein Kühlmittelkreislauf 10 verwendet, der ebenfalls als Komponente des erfindungsgemäßen Systems 2 ausgebildet ist. Dieser Kühlmittelkreislauf 10 umfasst einen Kühler 12, mit dem eine Temperatur eines Kühlmittels einzustellen ist. Außerdem umfasst der Kühlmittelkreislauf 10 ein Leitungssystem mit mehreren Leitungsabschnitten 14, durch die das Kühlmittel zu den zu kühlenden Maschinen und der Leistungselektronik 8 zu transportieren ist. Dabei umfasst der Kühlmittelkreislauf 10 eine Pumpe 16 zum Fördern des Kühlmittels. Entlang der Leitungsabschnitte 14 ist hier hinter der Pumpe 16 zunächst die Leistungselektronik 8, danach die Elektromaschine 4 und danach die Verbrennungskraftmaschine 6 angeordnet, wobei die Leistungselektronik 8 und die Elektromaschine 4 über einen Leitungsabschnitt 14 miteinander verbunden sind. Außerdem sind auch die Elektromaschine 4 und die Verbrennungskraftmaschine 6 über einen weiteren Leitungsabschnitt 14 miteinander verbunden.

Die Leistungselektronik 8, die Elektromaschine 4 sowie die Verbrennungskraftmaschine 6 sind hier direkt hintereinander in Reihe geschaltet. Außerdem umfasst der Kühlmittelkreislauf 10 ein erstes Ventil 18 und ein zweites Ventil 20, die je nach Bedarf zu öffnen oder zu schließen sind. Falls die beiden Ventile 18, 20 geschlossen sind, ist der Kühler 12 von der Leistungselektronik 8, der Elektromaschine 4 und der Verbrennungskraftmaschine 6 getrennt, so dass diese nicht gekühlt werden können. Falls die Ventile 18, 20 geöffnet sind, ist möglich, Kühlmittel, das von dem Kühler 12 gekühlt wird, angetrieben durch die Pumpe 16 durch die Leitungsabschnitte 14 des Kühlmittelkreislaufs 10 und somit nacheinander auch zu der Leistungselektronik 8, der Elektromaschine 4 sowie der Verbrennungskraftmaschine 6 zu transportieren.

Bei einem Betrieb des Kühlmittelkreislaufs 10 wird das von dem Kühler 12 gekühlte Kühlmittel von der und/oder über die Pumpe 16 zunächst zu der Leistungselektronik 8, dann zu der Elektromaschine 4 und nachfolgend zu der Verbrennungskraftmaschine 6 gefördert.

Falls das Kraftfahrzeug lediglich durch die Verbrennungskraftmaschine 6 angetrieben wird, wird für das Kühlmittel eine erste Temperatur eingestellt. Falls das Kraftfahrzeug im Hybridmodus durch die Elektromaschine 4 und die Verbrennungskraftmaschine 6 angetrieben wird, wird für das Kühlmittel eine zweite Temperatur eingestellt, die niedriger als die erste Temperatur ist. Falls das Kraftfahrzeug rein elektrisch und somit lediglich durch die Elektromaschine 8 angetrieben wird, wird für das Kühlmittel eine dritte Temperatur eingestellt, die niedriger als die zweite Temperatur ist.

## Patentansprüche

1. Verfahren zum Betreiben eines Kraftfahrzeugs, das eine als Verbrennungskraftmaschine (6) ausgebildete Maschine und eine als Elektromaschine (4) ausgebildete Maschine aufweist, wobei das Kraftfahrzeug mit mindestens einer dieser beiden Maschinen angetrieben wird, wobei beide Maschinen über einen gemeinsamen Kühlmittelkreislauf (10) mit einem Kühlmittel gekühlt werden, wobei die Verbrennungskraftmaschine (6) der Elektromaschine (4) nachgeschaltet wird, wobei Kühlmittel zunächst zu der Elektromaschine (4) und von der Elektromaschine (4) zu der Verbrennungskraftmaschine (6) gefördert wird, wobei für das Kühlmittel eine erste Temperatur eingestellt wird, wenn das Kraftfahrzeug lediglich durch die Verbrennungskraftmaschine (6) angetrieben wird, und wobei für das Kühlmittel eine zweite Temperatur eingestellt wird, wenn das Kraftfahrzeug durch die Elektromaschine (4) und die Verbrennungskraftmaschine (6) angetrieben wird, wobei die zweite Temperatur geringer als die erste Temperatur ist, **dadurch gekennzeichnet, dass** für das Kühlmittel eine dritte Temperatur eingestellt wird, wenn das Kraftfahrzeug lediglich durch die Elektromaschine (4) angetrieben wird, wobei die dritte Temperatur geringer als die zweite Temperatur ist.

2. Verfahren nach Anspruch 1, bei dem der Elektromaschine (4) eine Leistungselektronik (8) zugeordnet ist, die mit der Elektromaschine (4) betrieben wird.

3. Verfahren nach Anspruch 2, bei dem die Elektromaschine (4) der Leistungselektronik (8) nachgeschaltet wird, wobei Kühlmittel zunächst zu der Leistungselektronik (8) und von der Leistungselektronik (8) zu der Elektromaschine (4) gefördert wird.

4. System zum Betreiben eines Kraftfahrzeugs, wobei das Kraftfahrzeug eine als Verbrennungskraftmaschine (6) ausgebildete Maschine und eine als Elektromaschine (4) ausgebildete Maschine aufweist und mit mindestens einer dieser beiden Maschinen anzutreiben ist, wobei das System (2) einen für beide Maschinen gemeinsamen Kühlmittelkreislauf (10) mit einem Kühlmittel zum Kühlen beider Maschinen umfasst, wobei die Verbrennungskraftmaschine (6) der Elektromaschine (4) nachgeschaltet ist, wobei Kühlmittel zunächst zu der Elektromaschine (4) und von der Elektromaschine (4) zu der Verbrennungskraftmaschine (6) zu fördern ist, wobei für das Kühlmittel eine erste Temperatur einzustellen ist, wenn das Kraftfahrzeug lediglich durch die Verbrennungskraftmaschine (6) anzutreiben ist, und wobei für das Kühlmittel eine zweite Temperatur einzustellen ist, wenn das Kraftfahrzeug durch die Elektromaschine (4) und die Verbrennungskraftmaschine (6) anzutreiben ist, wobei die zweite Temperatur geringer als die erste Temperatur ist, **dadurch gekennzeichnet, dass** für das Kühlmittel eine dritte Temperatur einzustellen ist, wenn das Kraftfahrzeug lediglich durch die Elektromaschine (4) anzutreiben ist, wobei die dritte Temperatur geringer als die zweite Temperatur ist.

5. System nach Anspruch 4, das die beiden Maschinen umfasst, die über mindestens einen Leitungsabschnitt des Kühlmittelkreislaufs (10) miteinander verbunden und somit innerhalb des Kühlmittelkreislaufs (10) in Reihe geschaltet sind.

6. System nach Anspruch 4 oder 5, das eine Leistungselektronik (8) aufweist, die der Elektromaschine (4) zugeordnet ist.

7. System nach einem der Ansprüche 4 bis 6, bei dem der Kühlmittelkreislauf (10) einen Kühler (12) aufweist, der dazu ausgebildet ist, die Temperatur des Kühlmittels einzustellen.

8. System nach Anspruch 7, bei dem das Kühlmittel ausgehend von dem Kühler (12) zunächst zu der Elektromaschine (4) und danach zu der Verbrennungskraftmaschine (6) zu fördern ist.

## Claims

1. Method for operating a motor vehicle, which has an engine in the form of an internal combustion engine (6) and an engine in the form of an electric motor (4), wherein the motor vehicle is driven by at least one of these two engines, wherein both engines are cooled by a coolant via a common coolant circuit (10), wherein the internal combustion engine (6) is arranged downstream of the electric motor (4), wherein coolant is firstly conveyed to the electric motor (4) and from the electric motor (4) to the internal combustion engine (6), wherein a first temperature is set for the coolant when the motor vehicle is driven only by the internal combustion engine (6), and wherein a second temperature is set for the coolant when the motor vehicle is driven by the electric motor (4) and the internal combustion engine (6), wherein the second temperature is lower than the first temperature, **characterised in that** a third temperature is set for the coolant when the motor vehicle is driven only by the electric motor (4), wherein the third temperature is lower than the second temperature.

2. Method according to claim 1, wherein power electronics (8) operated by the electric motor (4) are assigned to the electric motor (4).

3. Method according to claim 2, wherein the electric motor (4) is arranged downstream of the power electronics (8), wherein coolant is conveyed firstly to the power electronics (8) and from the power electronics (8) to the electric motor (4).

4. System for operating a motor vehicle, wherein the motor vehicle has an engine in the form of an internal combustion engine (6) and an engine in the form of an electric motor (4) and is driven by at least one of these two engines, wherein the system (2) comprises a coolant circuit (10) common to both engines with a coolant for cooling both engines, wherein the internal combustion engine (6) is arranged downstream of the electric motor (4), wherein coolant is conveyed firstly to the electric motor (4) and from the electric motor (4) to the internal combustion engine (6), wherein a first temperature is set for the coolant when the motor vehicle is driven only by the internal combustion engine (6), and wherein a second temperature is set for the coolant when the motor vehicle is driven by the electric motor (4) and the internal combustion engine (6), wherein the second temperature is lower than the first temperature, **characterised in that** a third temperature is set for the coolant when the motor vehicle is driven only by the electric motor (4), wherein the third temperature is lower than the second temperature.

5. System according to claim 4, which comprises both engines which are connected to one another by at least one line section of the coolant circuit (10) and are thus are connected in series within the coolant circuit (10).

6. System according to claim 4 or 5, which has power electronics (8) which are assigned to the electric motor (4).

7. System according to any of claims 4 to 6, wherein the coolant circuit (10) includes a cooler (12), which is configured to set the temperature of the coolant.

8. System according to claim 7, wherein the coolant is conveyed from the cooler (12) firstly to the electric motor (4) and then to the internal combustion engine (6).

## Revendications

1. Procédé de fonctionnement d'un véhicule automobile qui présente une machine réalisée comme moteur à combustion interne (6) et une machine réalisée comme machine électrique (4), dans lequel le véhicule automobile est entraîné avec au moins une de ces deux machines, dans lequel les deux machines sont refroidies par un circuit de moyen de refroidissement (10) commun avec un moyen de refroidissement, dans lequel le moteur à combustion interne (6) est monté en aval de la machine électrique (4), dans lequel du moyen de refroidissement est tout d'abord transporté vers la machine électrique (4) et de la machine électrique (4) au moteur à combustion interne (6), dans lequel une première température est réglée pour le moyen de refroidissement, lorsque le véhicule automobile est entraîné uniquement par le moteur à combustion interne (6), et dans lequel une deuxième température est réglée pour le moyen de refroidissement, lorsque le véhicule automobile est entraîné par la machine électrique (4) et le moteur à combustion interne (6), dans lequel la deuxième température est inférieure à la première température, **caractérisé en ce qu'**une troisième température est réglée pour le moyen de refroidissement lorsque le véhicule automobile est entraîné uniquement par la machine électrique (4), dans lequel la troisième température est inférieure à la deuxième température.

2. Procédé selon la revendication 1, dans lequel une électronique de puissance (8) qui est actionnée avec la machine électrique (4) est associée à la machine électrique (4).

3. Procédé selon la revendication 2, dans lequel la machine électrique (4) est montée en aval de l'électronique de puissance (8), dans lequel du moyen de refroidissement est tout d'abord transporté à l'électronique de puissance (8) et de l'électronique de puissance (8) à la machine électrique (4).

4. Système de fonctionnement d'un véhicule automobile, dans lequel le véhicule automobile présente une machine réalisée comme moteur à combustion interne (6) et une machine réalisée comme machine électrique (4) et est à entraîner avec au moins une des ces deux machines, dans lequel le système (2) comporte un circuit de moyen de refroidissement (10) commun pour les deux machines avec un moyen de refroidissement pour le refroidissement des deux machines, dans lequel le moteur à combustion interne (6) est monté en aval de la machine électrique (4), dans lequel du moyen de refroidissement est tout d'abord à transporter à la machine électrique (4) et de la machine électrique (4) au moteur à combustion interne (6), dans lequel une première température est à régler pour le moyen de refroidissement, lorsque le véhicule automobile est à entraîner uniquement par le moteur à combustion interne (6), et dans lequel une deuxième température est à régler pour le moyen de refroidissement, lorsque le véhicule automobile est à entraîner par le moteur électrique (4) et le moteur à combustion interne (6), dans lequel la deuxième température est inférieure à la première température, **caractérisé en ce qu'**une troisième température est à régler pour le moyen de refroidissement, lorsque le véhicule automobile est à entraîner uniquement par la machine électrique (4), dans lequel la troisième température est inférieure à la deuxième température.

5. Système selon la revendication 4, qui comporte les deux machines qui sont reliées par au moins une section de conduite du circuit de moyen de refroidissement (10) entre elles et ainsi sont montées dans le circuit de moyen de refroidissement (10) en série.

6. Système selon la revendication 4 ou 5, qui présente une électronique de puissance (8) qui est associée à la machine électrique (4).

7. Système selon l'une des revendications 4 à 6, dans lequel le circuit de moyen de refroidissement (10) présente un radiateur (12) qui est réalisé afin de régler la température du moyen de refroidissement.

8. Système selon la revendication 7, dans lequel le moyen de refroidissement est à transporter à partir du radiateur (12) tout d'abord à la machine électrique (4) et ensuite au moteur à combustion interne (6).
